Europäisches Patentamt

European Patent Office

Office européen des brevets

(19)

(11) Veröffentlichungsnummer: **0 100 540**
**B1**

(12) # EUROPÄISCHE PATENTSCHRIFT

(45) Veröffentlichungstag der Patentschrift: **09.11.88**

(51) Int. Cl.⁴: **H 04 B 3/06, H 04 L 25/04**

(21) Anmeldenummer: **83107513.0**

(22) Anmeldetag: **29.07.83**

(54) **Schaltungsanordnung zur Gewinnung des Regelkriteriums für die Einstellung adaptiver Entzerrer bei digitaler Datenübertragung.**

(30) Priorität: **02.08.82 DE 3228840**

(43) Veröffentlichungstag der Anmeldung:
**15.02.84 Patentblatt 84/07**

(45) Bekanntmachung des Hinweises auf die
Patenterteilung:
**09.11.88 Patentblatt 88/45**

(84) Benannte Vertragsstaaten:
**AT CH DE GB IT LI**

(56) Entgegenhaltungen:
**DE-A-3 210 079**
**FR-A-2 059 287**
**US-A-3 185 963**
**US-A-3 578 914**

**PROCEEDINGS OF THE NATIONAL TELECOMMUNICATIONS CONFERENCE, Band 3.4, 29. November/3. Dezember 1981, Seiten E1.5.1. - E1.5.6, New Orleans, Louisiana, IEEE New York, US; H. TAKATORI et al.: "A new equalizing scheme for digital subscriber loop"**

(73) Patentinhaber: **Siemens Aktiengesellschaft**
**Berlin und München**
**Wittelsbacherplatz 2**
**D-8000 München 2 (DE)**

(72) Erfinder: **Müller, Eugen Dr.**
**Birgweg 8**
**D-8012 Hohenschäftlarn (DE)**
Erfinder: **Sontheim, Hans Ing.grad.**
**Alpspitzstrasse 14**
**D-8133 Feldafing (DE)**
Erfinder: **Stummer, Baldur Dipl.-Ing.**
**Wilhelm-Kuhnert-Strasse 21**
**D-8000 München 90 (DE)**

EP 0 100 540 B1

## Beschreibung

Die Erfindung betrifft eine Schaltungsanordnung zur Gewinnung des Regelkriteriums für die Einstellung adaptiver Entzerrer, gemäß dem Oberbegriff des Patentanspruches 1.

Bekanntlich sind auch bei der Übertragung digitaler Daten bzw. digitaler Informationen sogenannte adaptive Entzerrer erforderlich, deren Verhalten auf die Eigenschaften des jeweils verwendeten Kabels abgestellt werden muß. Adaptive Entzerrer sind in der Lage, sich selbst einzustellen und werden zum Ausgleich der längen- und frequenzabhängigen Kabeldämpfung verwendet. Der Frequenzgang des adaptiven Entzerrers verläuft dabei invers zum Frequenzgang eines mittleren Kabels. Die Einstellung erfolgt über eine passende Regelschaltung nach einem jeweils geeigneten Kriterium. Seine Ableitung soll einen möglichst geringen Schaltungsaufwand erfordern. Gleichzeitig ist eine möglichst große Sicherheit gegenüber kurzzeitigen Störimpulsen anzustreben Bekannte Verfahren benutzen den Spitzenwert der Signalspannung als Regelkriterium und sind somit von Störspitzen unmittelbar abhängig, die wegen einer bei Spitzenwertgleichrichrung vorzusehenden Nachwirkung auch über längere Zeit zu Fehleinstellungen und damit zu Übertragungsfehlern führen können. Zur Vermeidung dieser Schwierigkeiten könnte man auch daran denken, den langzeitigen Mittelwert der Signalleistung (z.B. über einige tausend Taktperioden gemittelt) als Kriterium zu wählen, doch wird nur in seltenen Fällen der Aufwand, wie z.B. für Quadrierer und Integratoren, akzeptabel sein, obwohl auf diese Weise eine weitgehende Unabhängigkeit von kurzzeitigen Störern erreichbar wäre.

Aus der US-PS 3 578 914 ist eine Entzerranordnung bekannt geworden, bei der der Spitzenwert der Signalspannung als Regelkriterium benutzt wird.

Der Erfindung liegt die Aufgabe zugrunde, den vorerwähnten Schwierigkeiten nach Möglichkeit abzuhelfen und zur Gewinnung des Regelkriteriums für adaptive Entzerrer geeignete Schaltungen anzugeben, bei denen einerseits der schaltungstechnische Aufwand verhältnismäßig gering bleibt und andererseits die Störanfälligkeit gegenüber kurzzeitigen Störimpulsen möglichst gering ist.

Ausgehend von einer Schaltungsanordnung der einleitend genannten Art, wird diese Aufgabe erfindungsgemäß durch eine Schaltung gelöst, bei der dem regelbaren Entzerrer die Entscheidungsschaltung folgt, anschließend ein erster Integrator geschaltet ist, dem eine Differenz-Schaltung nachfolgt, die auch von einem Sollwertgeber gespeist wird, und der Differenz-Schaltung ein zweiter Integrator folgt, dessen Ausgangssignal die Stellgröße für den regelbaren Entzerrer darstellt, und daß durch die Regelung das mittlere Tastverhältnis am Ausgang des Entscheiders auf einen vorzugebenden Sollwert eingestellt wird.

Weitere vorteilhafte Ausgestaltungen sind in den Unteransprüchen angegeben.

Anhand von Ausführungsbeispielen wird nachstehend die Erfindung noch näher erläutert.

Es zeigen in der Zeichnung

Fig. 1 das Prinzip einer erfindungsgemäßen Regelanordnung,

Fig. 2 eine Schaltungsanordnung, bei der eine digitale Realisierung des Regelkriteriums vorgenommen wird.

Bei der Erfindung wird für den Schaltungsaufbau von einer bestimmten Reihenfolge der Teilschaltungen ausgegangen. Regelbare Entzerrer, Entscheider, erster Integrator folgen aufeinander, wobei dem zweiten Integrator die Stellgröße für den regelbaren Entzerrer entnommen werden kann.

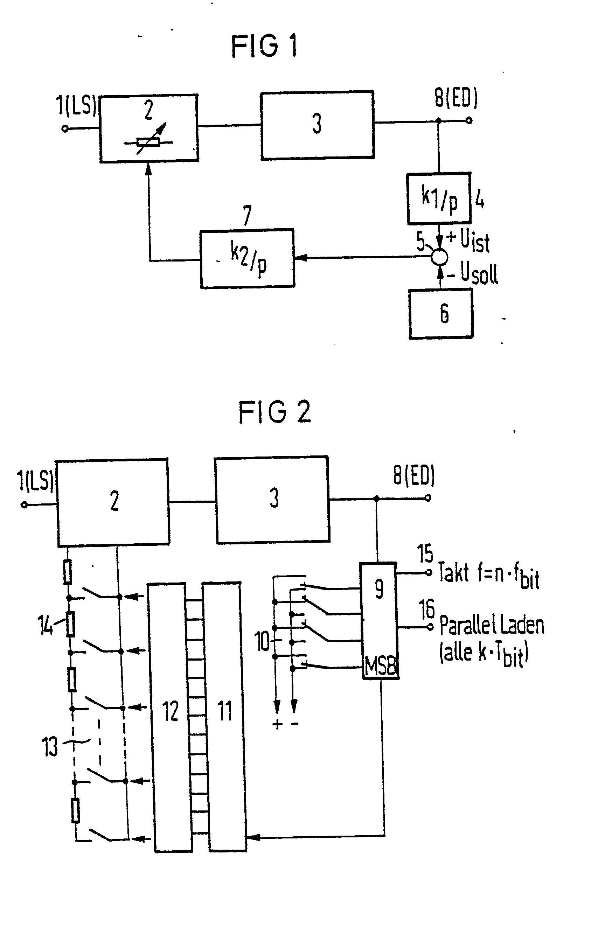

In dem Ausführungsbeispiel nach den Fig. 1 und 2 sind die einzelnen Schaltungen im Blockschaltbild dargestellt. Es ist jedoch davon auszugehen, daß die einzelnen Schaltungsbestandteile für sich bekannt sind, so daß hierauf nicht im einzelnen eingegangen werden muß, da dies für das Verständnis der Erfindung nicht nötig ist. Auch sind funkionsgleiche Elemente in den Fig. 1 und 2 mit gleichen Bezugsziffern dargestellt, so daß insoweit die zugehörige Figurenbeschreibung für die Fig. 1 bzw. für die Fig. 2 herangezogen werden kann.

Im Ausführungsbeispiel von Fig. 1 ist das Prinzipschaltbild der erfindungsgemäßen Regelanordnung dargestellt. Ein Leitungssignal LS kommt am Eingang 1 an einen regelbaren Entzerrer 2, dem ummittelbar ein Entscheider 3 nachgeschaltet ist. Die Empfangsdaten ED können am Ausgang 8 abgenommen werden. Dem Entscheider 3 ist ein erster Integrator 4 nachgeschaltet, dessen Frequenzgang durch $k_1/p$ gegeben ist, wobei $p = j\omega$ für die komplexe Frequenz steht. Dem Integrator 4 folgt eine Differenzschaltung 5, die auch aus einem Sollwertgeber 6 gespeist wird. Im Sollwertgeber 6 kann also ein vorgegebener Sollwert erzeugt werden. Der Ausgang der Differenzschaltung 5 führt auf einen zweiten Integrator 7, der als Stellgrößenverstärker wirkt und von dem aus der regelbare Entzerrer 2 angesteuert wird. Als Regelkriterium wird das mittlere Tastverhältnis am Ausgang des Entscheiders 3 verwendet, das auf einen vorzugebenden Sollwert eingeregelt wird. Der Entscheider 3 ist dabei so ausgebildet, daß er in an sich bekannter Weise als Schwellen-Entscheider wirkt. Aus Fig. 1 ist ferner zu entnehmen, daß für den Entzerrer 2 die Regelbarkeit symbolisch durch den schrägen Pfeil kenntlich gemacht ist, und daß der zweite Integrator 7 die Übertragungsfunktion $k_2/p$ hat, mit $k_2$ als weitere Konstante.

In der in Fig. 1 gezeigten Schaltung ist folgendes zu berücksichtigen.

Der zeitliche Mittelwert, d.h. das mittlere Tastverhältnis der Empfangsdaten ED, wird in dem Integrator 4 mit der Spannungs-Übertragungsfunktion $1/p$ ermittelt und mit dem Sollwert $U_{soll}$ aus dem Sollwertgeber 6 verglichen. Die Differenz, die in der Differenzschaltung 5 gebildet wird, regelt über den zweiten Integrator 7 die veränderlichen Elemente im regelbaren Entzerrer 2 solange, bis $U_{ist} = U_{soll}$ ist.

Der Sollwert ist abhängig von der gewählten Sendesignalform, von der Codierung und kann rechnerisch festgelegt werden, wenn alle möglichen Signalkombinationen betrachtet werden und ihre relativen Häufigkeiten bekannt sind. Gegebenenfalls ist eine Verwürfelung der Daten vorzunehmen.

Im Ausführungsbeispiel von Fig. 2 ist eine digitale Realisierung des Regelkriteriums dargestellt.

Es erfolgt dabei nur im regelbaren Entzerrer die Signalverarbeitung enalog. Am Ausgang 8 folge anstelle des Integrators 4 ein setzbarer Rückwärtszähler 9, der ursprüngliche Sollwertgeber 6 ist ersetzt durch die Schalteranordnung 10. Der als Stellgrößenverstärker wirkende Integrator 7 ist durch einen Auf-Ab-Zähler 11 realisiert, der eine Wiederholkontrolle enthält. Vom setzbaren Rückwärtszähler 9 wird also das MSB (most significant bit) auf den Auf-Ab-Zähler 11 gegeben. Abhängig vom Zählerstand betätigt die Decodierlogik 12 einen Satz von Schaltern 13, der den Widerstandswert der Widerstandskette 14 und damit das Verhalten des regelbaren Entzerrers beeinflußt.

Für die Realisierung können die Widerstände in 14 durch geschaltete Kondensatoren (Switched-Capacitor-Schaltungen) nachgebildet werden, wobei dieunterschiedlichen Widerstandswerte der Widerstandskette 14 durch verschiedene Kapazitätswerte (Gewichtssatz wird durch die Decodierlogik 12 gesteuert) oder durch verschiedene Schaltfrequenzen bei der S-C-Anordnung erreicht werden können.

Neben einer analogen Realisierung des Regelkreises, die Stellglieder sind differentielle Widerstände von z.B. Dioden oder Feldeffekttransistoren (FET), ist nach Fig. 2 eine digitale Lösung denkbar, bei der die Abgriffe in einem Widerstandsnetzwerk abhängig vom Ausgangssignal des Stellgrößenverstärkers, im gezeichneten Beispiel der Zählerstand eines Auf-Ab-Zählers, umgeschaltet werden. Auch digitale Verarbeitung des Zählerstandes mit analog-digital-gewandeltem Leitungssignal LS ist möglich. Zur Vermeidung dauernder Arbeitsbewegungen ist eine Verstellung erst nach mehrmaliger Korrektur in eine Richtung möglich. Der Sollwert $U_{soll}$ kann digital über die Schalter 10 eingestellt werden.

Der Vollständigkeit halber sind in Fig. 2 am setzbaren Rückwärtszähler 9 noch die beiden Eingänge 15 und 16 bezeichnet. Der Takteingang 15 wird mit einer Taktfrequenz f betrieben, die ein Vielfaches der Bitfolgefrequenz beträgt. Die ganzzahlige Größe n gibt die zeitliche Auflösung bei der Mittelwertbildung an.

Am Eingang 16 des Zählers 9 liegt das Signal "Parallel Laden" an, durch das alle $k \cdot T_{bit}$ der Sollwert vom Schalter 10 in den Zähler übernommen wird. Die Größe k bestimmt die Integrationszeitkonstante.

Eine weitere Realisierungsvariante ergibt sich bei vollständig analoger Signalverarbeitung (der Entscheider 3 sei ausgenommen), wobei die Schaltung durch an sich bekannte, in geeigneter Weise beschaltete Verstärkerschaltungen (z.B. Operationsverstärkerschaltungen) und die variablen Widerstände im Entzerrer Z als differentielle spannungsgesteuerte Widerstände (z.B. Dioden, FET) realisiert sind.

Eine weitere Abwandlung der Gesamtanordnung ist noch für den Fall zu sehen, daß das Leitungssignal LS in digitaler Form anliegt, auch die weitere Signalverarbeitung digital erfolgt. Vergleicht man die Fig. 1 und 2, dann ist zu erkennen, daß in diesem Fall der erste Integrator 4 zusammen mit der Differenzschaltung 5 durch einen Rückwärtszähler 9 ersetzt ist. Weiterhin ist der Sollwertgeber 6 durch eine Schalteranordnung 10 ersetzt und der zweite als Stellgrößenverstärker wirkende Integrator 7 wird durch einen sogenannten Auf-Ab-Zähler realisiert. Der Zählerstand dieses Auf-Ab-Zählers 11 bewirkt dann die stufige Einstellung des regelbaren Entzerrers 2.

Die beschriebenen Schaltungen und Schaltungsmöglichkeiten haben den Vorteil, daß sie ein Regelkriterium zur Einstellung adaptiver Entzerrer bei der Übertragung digitaler Signale bzw. digitaler Informationen zur Verfügung stellen, bei dem mit vertretbarem Schaltungsaufwand eine weitgehende Sicherheit gegenüber kurzzeitigen Störimpulsen gegeben ist.

**Patentansprüche**

1. Schaltungsanordnung zur Gewinnung des Regelkriteriums für die Einstellung adaptiver Entzerrer bei digitaler Datenübertragung, bestehend aus einem regelbaren Entzerrer (2), dadurch gekennzeichnet, daß die Schaltungsanordnung in der Weise aufgebaut ist, daß dem regelbaren Entzerrer (2) ein Schwellen-Entscheider (3) nachfolgt, daß anschließend ein erster Integrator (4) geschaltet ist, dem eine Differenz-Schaltung (5) nachfolgt, die auch von einem Sollwertgeber (6) gespeist ist, daß der Differenz-Schaltung (5) ein zweiter Integrator (7) folgt, dessen Ausgangssignal die Stellgröße für den regelbaren Entzerrer (2) bildet, und daß die Regelung in der Weise erfolgt, daß das mittlere Tastverhältnis am Ausgang des Schwellen-Entscheiders auf einen vorzugebenden Sollwert geregelt wird.

2. Schaltungsanordnung nach Anspruch 1, dadurch gekennzeichnet, daß die Signalverarbeitung mit Ausnahme des Entscheiders (3) analog erfolgt und die Schaltung durch beschaltete Operationsverstärker realisiert ist, so daß die stetig veränderlichen Elemente im regelbaren Entzerrer (2) spannungsgesteuerte differentielle Widerstände (z.B. Dioden oder Feldeffekttransistoren) sind.

3. Schaltungsanordnung nach Anspruch 1, dadurch gekennzeichnet, daß das Leitungssignal (LS) in digitaler Form anliegt und die Signalverarbeitung digital erfolgt, daß der erste Integrator (4) zusammen mit der Differenz-Schaltung (5) durch einen setzbaren Rückwärtszähler (9) und der Sollwertgeber (6) durch eine Schalteranordnung (10) und der zweite Integrator (7) durch einen AUF-Ab-Zähler (11) realisiert ist, dessen Zählerstand die stufige Einstellung des regelbaren Entzerrers (2) vornimmt.

4. Schaltungsanordnung nach Anspruch 1, dadurch gekennzeichnet, daß die Signalverarbeitung nur im regelbaren Entzerrer (2) analog erfolgt und der erste Integrator (4) zusammen mit der DifferenzSchaltung (5) durch einen setzbaren Rückwärtszähler (9) und der Sollwertgeber (6) durch eine Schalteranordnung (10) und der zweite Integrator (7) durch einen Auf-Ab-Zähler (11) realisiert ist, dessen Zählerstand über eine Decodierlogik (12) eine weitere Schalteranordnung (13) steuert und entweder durch Teilwiderstände einer Widerstandskette (14) oder durch geschaltete Kondensatoren (SC = Switched Capacitor) nachgebildete Widerstände die Einstellung des regelbaren Entzerrers (2) vornimmt

## Revendications

1. Montage pour l'obtention du critère de réglage pour réaliser le réglage d'égaliseurs adaptatifs lors de la transmission numérique de données, constitué par un égaliseur réglable (2), caractérisé par le fait que le montage est agencè de telle sorte qu'en aval de l'ègaliseur réglable (2) se trouve branché un discriminateur à seuil (3), qu'en aval de ce dernier se trouve branché un premier intégrateur (4), en aval duquel est branché un circuit (5) de formation d'une différence, qui est également alimenté par un générateur de valeurs de consigne (6), que le circuit (5) de formation de la différence est suivi d'un second intégrateur (7) dont le signal de sortie forme la grandeur de réglage pour l'égaliseur réglable (2), et que la régulation s'effectue de telle sorte que le taux d'impulsions moyen à la sortie du discriminateur à seuil est réglé sur une valeur de consigne pouvant être prédéterminée.

2. Montage suivant la revendication 1, caractérisé par le fait que le traitement des signaux s'effectue sous forme analogique, hormis dans le discriminateur (3), et le circuit est formé par des amplificateurs opérationnels câblés de sorte que les élèments continûment variables situés dans l'ègaliseur règlable (2) sont des résistances diffèrentielles commandées par la tension (par exemple des diodes ou des transistors à effet de champ).

3. Montage suivant la revendication 1, caractérisé par le fait que le signal de ligne (LS) est présent sous forme numérique et que le traitement des signaux s'effectue sous forme numérique, que le premier intégrateur (4) est constituè, conjointement avec le circuit (5) de formation de la diffèrence, par un compteur régressif (9) pouvant être positionné et que le générateur de valeurs de consigne (12) est constitué par un dispositif à interrupteurs (10) et que le second intégrateur (7) est constitué par un compteur progressif-régressif (11), dont l'état de comptage réalise le réglage échelonné de l'égaliseur réglable (2).

4. Montage suivant la revendication 1, caractérisé par le fait que le traitement des signaux s'effectue de façon analogique uniquement dans l'égaliseur réglable (2) et que le premier intègrateur (4) est constitué, conjointement avec le circuit (5) de formation de la différence, par un compteur régressif (9) pouvant être positionné, que le générateur de valeurs de consigne (6) est constitué par un dispositif à interrupteurs (10) et que le second intégrateur (7) est constitué par un compteur progressif-règressif, dont l'état de comptage commande, par l'intermédiaire d'un système logique de décodage (12), un autre dispositif à interrupteurs (13) et réalise le réglage de l'égaliseur réglable (2) soit à l'aide de résistances partielles d'une chaîne de résistances (14), soit à l'aide de résistances simulées par des condensateurs commutès (SC= switched capacitor).

## Claims

1. A circuit arrangement for acquiring the regulating criterion for the adjustment of adaptive equalisers for digital data transmission, comprising a regulatable equaliser (2), characterised in that the circuit arrangement is constructed such that the regulatable equaliser (2) is followed by a threshold decision circuit (3), after which a first integrator (4) is connected which is followed by a difference circuit (5) which is also supplied by a theoretical value generator (6), and which is connected at its output to a second integrator (7) whose output signal forms the control variable for the regulatable equaliser (2), the regulation taking place in such manner that the mean pulse duty factor at the output of the threshold decision circuit is regulated to a predetermined theoretical value.

2. A circuit arrangement as claimed in Claim 1, characterised in that the signal processing, with the exception of the decision circuit (3), takes place in analogue form, and that the circuit is constructed from wired operation amplifiers so that the continuously variable elements in the regulatable equaliser (2) are voltage-controlled differential reactances (e.g, diodes or field-effect transistors).

3. A circuit arrangement as claimed in Claim 1, charaterised in that the line signal (LS) occurs in digital form, and the signal processing is carried out in digital form, that the first integrator (4), together with the difference circuit (5), are formed by a backwards counter (9) which can be set, and the theoretical value generator (6) is formed by a switch arrangement (10), and the second integrator (7) is formed by an up-down counter (11) whose count carries out a stepped adjustment of the regulatable equaliser (2).

4. A circuit arrangement as claimed in Claim 1, characterised in that the signal processing takes place in analogue form only in the regulatable equaliser (2), and that the first integrator (4), together with the difference circuit (5), is formed by a backwards counter (9) which can be set, the theoretical value generator (6) is formed by a switch arrangement (10), and the second integrator (7) is formed by an up-down counter (11)

7

0 100 540

8

whose count controls a further switch arrangement (13) via a decoder logic unit (12) and, either by means of individual impedances in an impedance chain (14), or by means of impedances simulated by switched capacitors (SC), carries out the adjustment of the regulatable equaliser (2).

# FIG 1

1(LS)

2

3

8(ED)

k1/p 4

7

k2/p

5 + U_ist

− U_soll

6

# FIG 2

1(LS)

2

3

8(ED)

15 Takt f=n·f_bit

9

16 Parallel Laden (alle k·T_bit)

10

MSB

14

12 11

13

+ −